Europäisches Patentamt

European Patent Office

Office européen des brevets

(19)

(11) **EP 0 652 841 B1**

(12) **FASCICULE DE BREVET EUROPEEN**

(45) Date de publication et mention
de la délivrance du brevet:
**17.07.1996 Bulletin 1996/29**

(21) Numéro de dépôt: **93917858.8**

(22) Date de dépôt: **10.08.1993**

(51) Int. Cl.$^6$: **B65D 75/58**, B65D 71/00,
C08K 5/09

(86) Numéro de dépôt international:
**PCT/FR93/00799**

(87) Numéro de publication internationale:
**WO 94/03375 (17.02.1994 Gazette 1994/05)**

(54) **COMPOSITION DE POLYMERE POUR FEUILLE D'EMBALLAGE A OUVERTURE DECHIRABLE**

Polymerzusammensetzung für aufreissbare Verpackungsfolie

POLYMER COMPOSITION FOR TEAR-OPEN WRAPPING FILM

(84) Etats contractants désignés:
**BE CH DE DK ES FR GB GR IT LI**

(30) Priorité: **10.08.1992 FR 9209879**

(43) Date de publication de la demande:
**17.05.1995 Bulletin 1995/20**

(73) Titulaire: **GENERALE DE GRANDES SOURCES
F-75008 Paris (FR)**

(72) Inventeur: **CATHALA, Georges
F-27300 Bernay (FR)**

(74) Mandataire: **Dronne, Guy
Cabinet Beau de Loménie
158, rue de l'Université
75340 Paris Cédex 07 (FR)**

(56) Documents cités:
**EP-A- 0 091 612**          **EP-A- 0 409 454**
**EP-A- 0 431 810**          **EP-A- 0 451 762**
**EP-A- 2 684 967**          **US-A- 3 396 841**
**US-A- 3 403 779**          **US-A- 4 104 216**
**US-A- 4 391 952**

Printed by Rank Xerox (UK) Business Services
2.12.4/3.4

## Description

La présente invention a pour objet un procédé et un dispositif d'emballage de produits par film plastique à ouverture rapide.

De façon plus précise, l'invention concerne notamment l'emballage de produits tels que des bouteilles, des boîtes, des bocaux, etc. à l'aide d'un film plastique qui permet de plus une ouverture par déchirement rapide de l'emballage pour avoir accès commodément aux produits. Pour assurer un effet de serrage des produits, le film plastique peut être thermo-rétracté ou étiré et l'emballage est fermé par thermo-soudage ou par collage.

On trouve de plus en plus fréquemment des produits qui sont proposés à la vente en étant regroupés en un certain nombre, par exemple des bouteilles d'eau minérale regroupées par six qui sont emballées à l'aide d'un film plastique. Ce film permet une très bonne solidarisation des différents produits et de par sa constitution il présente souvent une ouverture à chacune de ses extrémités. Lorsque l'utilisateur veut arracher l'emballage pour prendre les produits, par exemple les bouteilles, cette opération n'est pas toujours très aisée puisque par définition le film plastique utilisé est très résistant.

Il est également intéressant de disposer d'un film d'emballage qui puisse être déchiré selon plusieurs directions selon le type d'emballage réalisé.

Un objet de la présente invention est de fournir un procédé et un dispositif d'emballage de produits par film plastique qui permettent une ouverture aisée par arrachage du film afin d'avoir accès aux produits emballés tout en maintenant une grande résistance mécanique de l'emballage lors de la manipulation des produits emballés.

Pour atteindre ce but, le procédé de réalisation d'un emballage à ouverture rapide pour le conditionnement d'objets se caractérise en ce qu'il comprend les étapes suivantes :

on ajoute à au moins un matériau plastique extrudable un pourcentage pondéral d'un agent fragilisant ;

on réalise un film monocouche par monoextrusion à partir de ladite composition ;

on entoure au moins partiellement lesdits objets à l'aide d'une portion dudit film et on réalise des moyens formant amorce de déchirure dans ladite portion du film par quoi on peut déchirer ledit emballage dans la direction prédéterminée par ladite amorce.

On comprend qu'ainsi l'ensemble de l'emballage a une composition homogène et grâce à la présence de l'agent fragilisant on peut obtenir la déchirure de l'emballage selon une direction correspondant à la réalisation particulière des moyens formant amorce de déchirure. Cette direction de déchirage est de préférence soit la direction d'extrusion du film, soit la direction perpendiculaire à cette dernière.

Ces moyens formant amorce de déchirure peuvent consister en une pré-découpe dans le film plastique ou encore en la mise en place d'une languette de déchirement à proximité d'un bord ouvert du film formant l'emballage.

Le mélange de matières premières nécessaire à la réalisation du film est fait à partir de tout élément ionomérisé (global ou partiel) avec des copolymères acides tels que EAA (Ethyl-Acide-Acrylique), EMA (Ethyl-Methyl-Acrylique) ou autres, neutralisés partiellement ou non avec des cations, qu'ils soient zinc, sodium ou autres.

De préférence, la teneur pondérale en agent fragilisant est comprise entre 5 et 30%.

Le dispositif d'emballage d'objets à ouverture rapide se caractérise en ce qu'il comprend un film monocouche en matériau plastique contenant un agent fragilisant et entourant au moins partiellement lesdits objets et au moins un moyen formant amorce de déchirure, par quoi ledit emballage peut être déchiré manuellement selon au moins une direction prédéterminée.

D'autres caractéristiques et avantages de la présente invention apparaîtront mieux à la lecture de la description qui suit de plusieurs modes de mise en oeuvre de l'invention donnés à titre d'exemples non limitatifs. La description se réfère aux figures annexées sur lesquelles :

- la figure 1 est une vue en élévation de face d'un premier mode de réalisation de l'emballage pour emballer un groupe de bouteilles ;
- la figure 2 est une vue de côté de l'emballage de la figure 1 ;
- la figure 3 est un schéma montrant un premier mode de réalisation de l'amorce de déchirure ;
- la figure 4 est une vue schématique montrant un deuxième mode de réalisation de l'amorce de déchirure ;
- la figure 5 est une vue schématique montrant un troisième mode de réalisation de l'amorce de déchirure ; et
- les figures 6, 7 et 8 montrent respectivement en élévation et en vue de dessus des emballages munis d'autres moyens d'amorce de déchirure, et
- la figure 9 est un schéma explicitant les tests de déchirabilité du film.

Avant de décrire en détails plusieurs modes de mise en oeuvre de l'invention, on va en décrire le principe.

Pour réaliser le film plastique servant d'emballage, on part d'un mélange de matériaux plastiques couramment utilisés pour réaliser ce type de film et d'un agent fragilisant qui est de préférence un ionomère. Les matériaux plastiques utilisés peuvent de manière classique être le polyéthylène radicalaire, le polyéthylène linéaire, le polyéthylène haute densité ou encore un mélange de ces composants. L'agent fragilisant constitué de préférence par un ionomère peut être notamment les produits commercialisés par la société EXXON sous les dénominations IOTEK 4000, 4200 ou 3110 ou le produit commercialisé par la société DUPONT DE NEMOURS sous la marque SURLYN 1601 ou 1650.

L'ionomère est de préférence basé sur un précurseur acide acrylique ou méthacrylique neutralisé par un cation qui est de préférence le sodium ou le zinc.

Plus généralement, le mélange de matières premières nécessaire à la réalisation du film est fait à partir de tout élément ionomérisé (global ou partiel) avec des copolymères acides tels que EAA (Ethyl-Acide-Acrylique), EMA (Ethyl-Methyl-Acrylique) ou autres, neutralisés partiellement ou non avec des cations, qu'ils soient zinc, sodium ou autres.

L'adjonction de l'agent fragilisant au matériau plastique de base constituant le film permet, après avoir réalisé dans le film une amorce de déchirure, de procéder à la déchirure effective du film de façon manuelle sans que cela nécessite d'efforts selon la direction correspondant à l'amorce de déchirure. Le film est réalisé par mono-extrusion à partir du mélange d'une part d'un composé de base constitué par du polyéthylène basse densité radicalaire et éventuellement un polyéthylène linéaire ou un polyéthylène haute densité ou éventuellement du mélange de deux ou de trois de ces composés et d'autre part de l'agent fragilisant.

Le teneur pondérale en agent fragilisant est de préférence comprise entre 5 et 30%. Des essais effectués avec une teneur pondérale en agent fragilisant de 15 à 25% ont donné de très bons résultats quant à la facilité de déchirement comme on le montrera ultérieurement.

Le film monocouche d'emballage est obtenu par monoextrusion comme on l'a expliqué précédemment. Les conditions d'extrusion par soufflage sont de préférence les suivantes.

La température d'extrusion est de 160° à 220°C selon l'indice de fluidité (Melt index) des résines de base utilisées. Le taux de gonflage est compris entre 1,5 et 5. Le taux de tirage est compris entre 1,5 et 30 et de préférence entre 1,5 et 10. L'épaisseur du film est de préférence comprise entre 20 et 150 microns ; l'entrefer de la tête d'extrusion est compris entre 0,6 et 2,8 mm et de préférence entre 0,8 et 1,2 mm. Enfin, l'indice de fluidité des résines utilisées est de préférence compris entre 0,2 et 2 lorsqu'on veut utiliser les forces de rétraction du film. Dans le cas contraire l'indice de fluidité peut aller de 0,2 jusqu'à 15 pour certaines résines.

Le contrôle de la déchirabilité d'un film selon une direction donnée se fait sur une éprouvette du film qui est représentée sur la figure 9. Le largeur $l$ de l'éprouvette est de 360 mm et sa longueur L est de 500 mm pour les essais de déchirure selon le sens "machine" c'est-à-dire le sens d'extrusion, et de 300 mm pour les essais de déchirure dans le sens transversal c'est-à-dire perpendiculairement au sens d'extrusion. L'amorce de déchirure A à une largeur $b$ de 20 mm et une longueur $a$ de 25 mm. On tire sur l'amorce A jusqu'au bout de l'éprouvette avec une vitesse d'environ 250 mm/seconde. On mesure la largeur $a'$ de la déchirure à l'autre extrémité de l'éprouvette c'est-à-dire 500 mm ou 300 mm plus loin selon le sens de déchirure. On effectue 5 essais pour chaque sens de déchirure. Le coefficient de déchirabilité R est donné par le rapport $\frac{a'}{a}$ exprimé en pourcents. Le coefficient R doit être supérieur à 30%.

On va donner maintenant deux exemples de réalisation de film conforme à l'invention.

EXEMPLE I

La composition pondérale du film est la suivante :

| | |
|---|---|
| - Polyéthylène basse densité radicalaire type 150 BG de la société EXXON | 70% |
| - Ionomère IOTEK 3110 d'EXXON | 20% |
| - Polyéthylène linéaire type 0209AA de BRITISH PETROLEUM | 10% |

Les conditions d'extrusion sont les suivantes :

On utilise une extrudeuse de diamètre 120/25 D ayant une tête d'extrusion de 500 mm et un entrefer de 1 mm. Le taux de gonflage est de 3, 12 et de taux de tirage de 4, 3. L'épaisseur du film est de 67 microns, la laize d'extrusion est de 2450 mm et la température d'extrusion au niveau du fourreau est de 160 à 200°C.

Les essais effectués sur ce film ont donné les résultats suivants : $R_1$ étant la déchirabilité dans le sens d'extrusion et $R_2$ étant la déchirabilité dans le sens transversal.

|          | $R_1$ | $R_2$ |
|----------|-------|-------|
| Essai 1  | 86    | 111   |
| Essai 2  | 90    | 123   |
| Essai 3  | 92    | 117   |
| Essai 4  | 102   | 125   |
| Essai 5  | 97    | 118   |

On constate que ce film présente une très bonne déchirabilité selon les deux directions, cette déchirabilité étant bien au-dessus des normes.

EXEMPLE II

Composition pondérale du film :

| - Polyéthylène basse densité radicalaire 150 GB d'EXXON | 80% |
|---|---|
| - Ionomère IOTEK 3110 d'EXXON | 20% |

On utilise la même extrudeuse que dans l'exemple I et un taux de gonflage de 2,55 et de tirage de 7,16. L'épaisseur du film est de 45 microns et la laize d'extrusion de 2000mm et le débit de 300kg.

Les tests de déchirure ont donné les résultats suivants :

|          | $R_1$ | $R_2$ |
|----------|-------|-------|
| Essai 1  | 88    | 48    |
| Essai 2  | 87    | 76    |
| Essai 3  | 88    | 96    |
| Essai 4  | 86    | 58    |
| Essai 5  | 88    | 85    |

On voit que les résultats des essais de déchirure selon les deux directions sont encore largement au-dessus des normes requises.

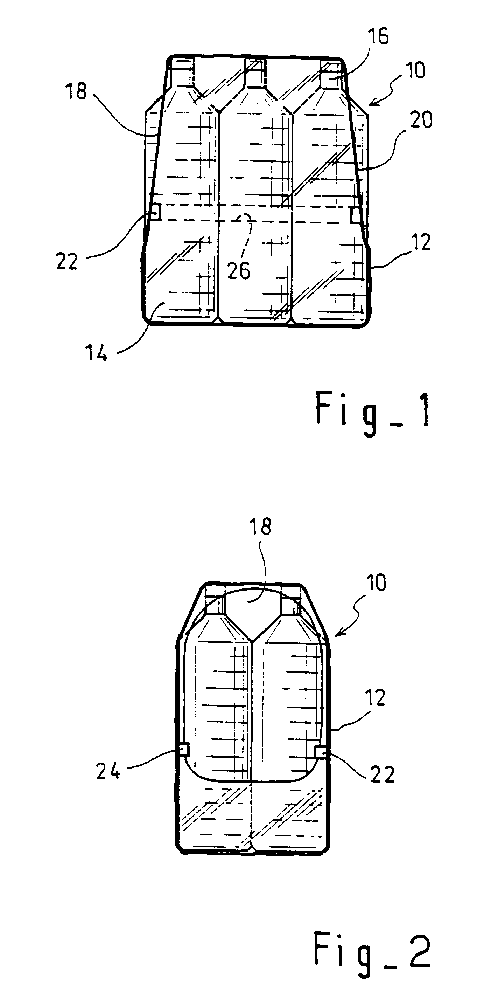

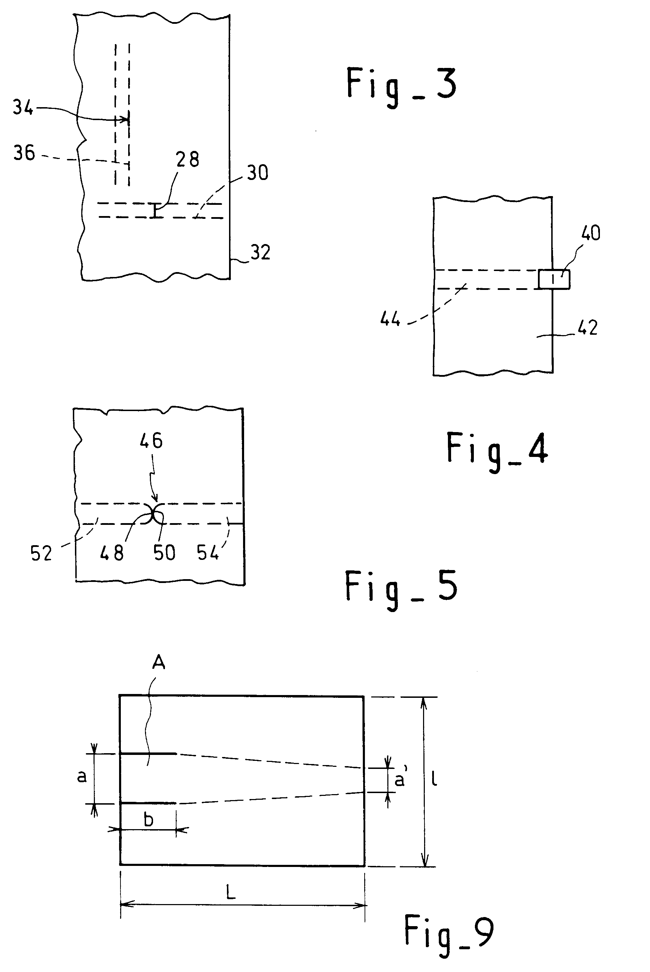

En se référant maintenant aux figures 1 et 2, on va décrire un premier mode de réalisation d'un emballage conforme à l'invention. Sur ces figures, on a représenté à titre d'exemple six bouteilles d'eau minérale, portant la référence générique 10, emballées dans un film plastique référencé 12. Comme cela est bien connu, le film plastique 12 est formé pour entourer de façon étroite les extrémités inférieures 14 des bouteilles, ainsi que leurs extrémités supérieures 16, afin de maintenir l'ensemble des six bouteilles étroitement serrées les unes contre les autres. Comme le montre mieux la figure 2, lors de cette opération, le film plastique laisse dans l'exemple décrit deux ouvertures 18 et 20 respectivement à chaque extrémité de l'emballage au-dessus des parties inférieures 14 des bouteilles. Comme le montre les figures, on a fixé des amorces de déchirure 22 et 24 qui sont constituées par une languette en papier ou en plastique collée ou soudée sur le film plastique lui-même. Comme on le voit, de préférence, ces amorces sont fixées à la limite des orifices 18 ou 20. Grâce à la fragilisation du matériau plastique constituant l'emballage, il suffit pour l'usager de saisir une des amorces de déchirure pour tirer aisément le film plastique qui se déchire selon la ligne représentée en pointillés 26 de la figure 1. Il faut bien comprendre que les pointillés ne représentent nullement une prédécoupe.

La figure 3 montre un autre exemple de réalisation de l'amorce de déchirure. Celle-ci est constituée par une pré-découpe 28 en forme de H, l'amorce 28 définissant ainsi un sens de déchirure transversale 30 par rapport au sens d'extrusion du film 32. L'amorce de déchirure 34 en H peut être réalisée parallèlement au sens d'extrusion, c'est-à-dire au sens longitudinal du film, on obtient alors une déchirure 36 selon le sens longitudinal du film plastique. L'ouverture est obtenue en enfonçant avec le doigt la partie pré-découpée et en tirant sur la languette ainsi réalisée.

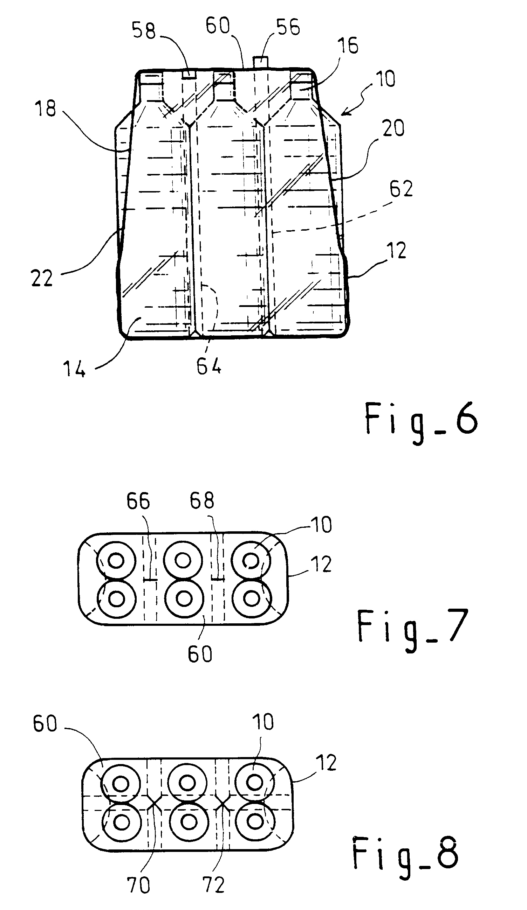

La figure 4 illustre un mode de réalisation des moyens formant amorce de déchirure correspondant à celle qui est montrée sur les figures 1 et 2. Cette amorce est constituée par une languette plastique ou papier 40 collée ou soudée sur le film plastique. Une partie de cette languette dépasse du bord du film 42 pour pouvoir être saisie commodément à la main. Les lignes en pointillés 44 montrent le sens de la déchirure prédéterminée par la position de la languette.

La figure 5 montre un autre mode de réalisation de l'amorce de déchirure qui est constituée à nouveau par une pré-découpe 46 constituée par deux demi-cercles 48, 50 tangents entre eux. Cette pré-découpe permet ainsi de définir deux sens opposés de déchirure 52 et 54.

La figure 6 montre une variante de réalisation des figures 1 et 2. Les languettes 56 et 58 formant amorce de pré-découpe sont fixées à la partie supérieure 60 de l'emballage. La déchirure se produit alors verticalement comme cela est shématisé par les lignes 62 et 64.

Les figures 7 et 8 illustrent deux autres modes de réalisation d'amorce de déchirure par prédécoupes réalisées à la partie supérieure 60 de l'emballage. Dans le cas de la figure 7, les prédécoupes 66 et 68 sont en forme de H et permettent de déchirer l'emballage verticalement sur ses faces principales. Dans le cas de la figure 8, les prédécoupes 70 et 72 sont en forme de X et permettent de déchirer l'emballage verticalement sur ses faces principales ou selon la grande longueur de l'emballage. De préférence les directions de déchirures correspondent à la direction d'extrusion du film et à la direction transverse.

On comprend que le film plastique extrudé comporte de façon homogène l'agent fragilisant. L'amorce de déchirure peut donc être réalisée en n'importe quel endroit de la portion de film formant l'emballage en fonction des besoins particuliers liés aux objets et à la forme de l'emballage.

Il faut souligner de plus que le fait d'introduire directement dans le matériau plastique de base l'agent fragilisant permet d'obtenir le film d'emballage par mono extrusion ce qui réduit très sensiblement le coût de sa fabrication.

Le polymère de base et le ionomère pris indépendamment ne satisfont pas aux exigences de cohésion et de propagation facile de la déchirure. En revanche, de façon surprenante, le mélange de ces deux produits dans les proportions indiquées permet d'obtenir ce résultat. Il apparaît que cet effet de synergie permet d'obtenir une cristallisation contrôlée, une biorientation, une concentration de contraintes, une hétérogénéïté du produit final et en conséquence la création d'amorces intrinsèques de rupture.

Dans la description précédente, on a plus particulièrement considéré l'emballage de bouteilles. Il va cependant de soi que l'emballage selon l'invention peut être utilisé pour l'emballage de nombreux autres produits tels que des palettes de groupes d'objets déjà emballés ou pour l'emballage d'objets uniques de grandes dimensions.

**Revendications**

1. Procédé de réalisation d'un emballage à ouverture rapide pour le conditionnement d'objets, caractérisé en ce qu'il comprend les étapes suivantes :

   on ajoute à au moins un matériau plastique extrudable un agent fragilisant ;
   on réalise un film monocouche par monoextrusion à partir de ladite composition ;
   on entoure au moins partiellement lesdits objets à l'aide d'une portion dudit film et on réalise des moyens formant amorce de déchirure dans ladite portion du film par quoi on peut déchirer ledit emballage dans la direction prédéterminée par ladite amorce.

2. Procédé selon la revendication 1, caractérisé en ce que ledit agent fragilisant est un ionomère basé sur un copolymère acide.

3. Procédé selon la revendication 2, caractérisé en ce que le ionomère est basé sur un précurseur acide acrylique ou methacrylique neutralisé par des cations.

4. Procédé selon la revendication 3, caractérisé en ce que les cations sont des cations zinc ou sodium.

5. Procédé selon la revendication 2, caractérisé en ce que le copolymère acide est un éthyl-acide acrylique ou un éthyl méthyl-acrylique.

6. Procédé selon la revendication 5, caractérisé en ce que le dit copolymère acide est au moins partiellement neutralisé avec des cations sodium ou zinc.

7. Procédé selon l'une quelconque des revendications 2 à 4, caractérisé en ce que ladite teneur pondérale en agent fragilisant est comprise entre 5 et 30%.

8. Procédé selon la revendication 5, caractérisé en ce que la teneur pondérale en agent fragilisant est comprise entre 15 et 25%.

**9.** Procédé selon l'une quelconque des revendications 1 à 6, caractérisé en ce que le matériau plastique de base est constitué par un matériau plastique choisi dans le groupe des polyéthylènes radicalaires, et des polyéthylènes linéaires et haute densité.

**10.** Procédé selon la revendication 9, caractérisé en ce que le matériau plastique est constitué par un mélange d'au moins deux de ces composés.

**11.** Procédé selon l'une quelconque des revendications 1 à 10, caractérisé en ce qu'on réalise ledit film par extrusion par soufflage en ce que le taux de tirage est compris entre 1,5 et 30 et le taux de gonflage est compris entre 1,5 et 5.

**12.** Procédé selon la revendication 11, caractérisé en ce que le taux de tirage est compris entre 1,5 et 10.

**13.** Procédé selon l'une quelconque des revendications 1 à 12, caractérisé en ce que l'indice de fluidité des composants utilisés est compris entre 0,2 et 15.

**14.** Procédé selon la revendication 13, caractérisé en ce que l'indice de fluidité des composants utilisés est compris entre 0,2 et 2 par quoi ledit film est rétractable.

**15.** Dispositif d'emballage d'objets à ouverture rapide, caractérisé en ce qu'il comprend un film monocouche en matériau plastique contenant un agent de fragilisation obtenu par monoextrusion et entourant au moins partiellement lesdits objets, et au moins un moyen formant amorce de déchirure, par quoi ledit emballage peut être déchiré manuellement selon au moins une direction prédéterminée à partir desdits moyens formant amorce de déchirure.

**16.** Dispositif d'emballage selon la revendication 15 caractérisé en ce que lesdits moyens formant amorce de déchirure comprennent une pré-découpe dudit film.

**17.** Dispositif d'emballage selon la revendication 16, caractérisé en ce que lesdits moyens formant amorce de déchirure comprennent une languette solidaire dudit film.

**18.** Dispositif d'emballage selon l'une quelconque des revendications 15 à 17, caractérisé en ce que l'agent fragilisant est du type défini dans l'une quelconque des revendications 2 à 5.

**19.** Dispositif d'emballage selon l'une quelconque des revendications 15 à 18, caractérisé en ce que ladite amorce de déchirure est disposée selon la direction d'extrusion.

**20.** Dispositif d'emballage selon l'une quelconque des l'une quelconque des revendications 15 à 19, caractérisé en ce que l'amorce de déchirure est disposée selon une direction orthogonale à la direction d'extrusion.

## Claims

**1.** A process for manufacturing a fast-opening package for the packaging of objects, characterised in that it comprises the following stages:

-   an embrittling agent is added to at least one extrudable plastic material;
-   a single-layer film is produced by monoextrusion using said composition;
-   said objects are surrounded at least partly using a portion of said film and means are provided forming a starting point for tearing in said portion of the film, by which said package can be torn in the direction predetermined by said starting point.

**2.** A process according to Claim 1, characterised in that said embrittling agent is an ionomer based on an acid copolymer.

**3.** A process according to Claim 2, characterised in that the ionomer is based on an acrylic or methacrylic acid precursor neutralised by cations.

**4.** A process according to Claim 3, characterised in that the cations are zinc or sodium cations.

**5.** A process according to Claim 2, characterised in that the acid copolymer is an acrylic ethyl acid or a methyl-acrylic ethyl.

6. A process according to Claim 5, characterised in that said acid copolymer is at least partly neutralised with sodium or zinc cations.

7. A process according to any one of Claims 2 to 4, characterised in that said content by weight of embrittling agent ranges between 5 and 30%.

8. A process according to Claim 5, characterised in that the content by weight of embrittling agent ranges between 15 and 25%.

9. A process according to any one of Claims 1 to 6, characterised in that the basic plastic material is constituted by a plastic material chosen from the group of radical-like polyethylenes and high-density linear polyethylenes.

10. A process according to Claim 9, characterised in that the plastic material is constituted by a mixture of at least two of these compounds.

11. A process according to any one of Claims 1 to 10, characterised in that said film is produced by extrusion blow-moulding in that the drawing ratio ranges between 1.5 and 30 and the swelling ratio ranges between 1.5 and 5.

12. A process according to Claim 11, characterised in that the drawing ratio ranges between 1.5 and 10.

13. A process according to any one of Claims 1 to 12, characterised in that the flow factor of the components used ranges between 0.2 and 15.

14. A process according to Claim 13, characterised in that the flow factor of the components used ranges between 0.2 and 2 by which said film is shrinkable.

15. A device for packing objects with fast opening, characterised in that it comprises a single-layer film of plastic material containing an embrittling agent obtained by monoextrusion and surrounding said objects at least partly, and at least one means forming a starting point for tearing, by which said package can be torn manually in at least one predetermined direction using said means forming a starting point for tearing.

16. A packing device according to Claim 15 characterised in that said means forming a starting point for tearing comprise a pre-cut in said film.

17. A packing device according to Claim 16, characterised in that said means forming a starting point for tearing comprise a tongue integral with said film.

18. A packing device according to any one of Claims 15 to 17, characterised in that the embrittling agent is of the type defined in any one of Claims 2 to 5.

19. A packing device according to any one of Claims 15 to 18, characterised in that said starting point for tearing is arranged in the direction of extrusion.

20. A packing device according to any one of Claims 15 to 19, characterised in that the starting point for tearing is arranged in a direction orthogonal to the direction of extrusion.

**Patentansprüche**

1. Verfahren zur Gestaltung einer schnell zu öffnenden Verpackung zum Verpacken von Gegenständen, dadurch gekennzeichnet, daß es die folgenden Schritte umfaßt:
   man setzt wenigstens einem extrudierbaren Kunststoffmaterial ein Versprödungsmittel zu,
   man stellt einen einlagigen Film durch Monoextrusion ausgehend von der Zusammensetzung her,
   man umhüllt wenigstens teilweise die Gegenstände mit Hilfe eines Teiles des Films und man gestaltet Mittel, welche einen Reißansatz in dem Teil des Films bilden, durch welchen man die Verpackung in der vorbestimmten Richtung durch den Ansatz aufreißen kann.

2. Verfahren nach Anspruch 1, dadurch gekennzeichnet, daß das Versprödungsmittel ein auf einem sauren Copolymer basierendes Ionomer ist.

3. Verfahren nach Anspruch 2, dadurch gekennzeichnet, daß das Ionomer auf einem durch Kationen neutralisierten Acryl- oder Methacrylsäurevorläufer basiert.

4. Verfahren nach Anspruch 3, dadurch gekennzeichnet, daß die Kationen Zink- oder Natriumkationen sind.

5. Verfahren nach Anspruch 2, dadurch gekennzeichnet, daß das saure Copolymer eine Ethylacrylsäure- oder eine Ethylmethylacrylcopolymer ist.

6. Verfahren nach Anspruch 5, dadurch gekennzeichnet, daß das saure Copolymer wenigstens teilweise mit Natrium- oder Zinkkationen neutralisiert ist.

7. Verfahren nach einem der Ansprüche 2 bis 4, dadurch gekennzeichnet, daß der Gewichtsgehalt an Versprödungsmittel zwischen einschließlich 5 und 30 % beträgt.

8. Verfahren nach Anspruch 5, dadurch gekennzeichnet, daß der Gewichtsgehalt an Versprödungsmittel zwischen einschließlich 15 und 25 % beträgt.

9. Verfahren nach einem der Ansprüche 1 bis 6, dadurch gekennzeichnet, daß das Basiskunststoffmaterial aus einem Kunststoffmaterial besteht, daß aus der Gruppe der radikalartigen Polyethylene und der linearen Polyethylene und der Polyethylene mit hoher Dichte ausgewählt ist.

10. Verfahren nach Anspruch 9, dadurch gekennzeichnet, daß das Kunststoffmaterial aus einer Mischung aus wenigstens zwei dieser Verbindungen besteht.

11. Verfahren nach einem der Ansprüche 1 bis 10, dadurch gekennzeichnet, daß man den Film durch Extrusionsblasen herstellt, daß das Zugverhältnis zwischen einschließlich 1,5 und 30 und das Aufblasverhältnis zwischen einschließlich 1,5 und 5 liegt.

12. Verfahren nach Anspruch 11, dadurch gekennzeichnet, daß das Zugverhältnis zwischen einschließlich 1,5 und 10 liegt.

13. Verfahren nach einem der Ansprüche 1 bis 12, dadurch gekennzeichnet, daß die Fließzahl der verwendeten Bestandteile zwischen einschließlich 0,2 und 15 liegt.

14. Verfahren nach Anspruch 13, dadurch gekennzeichnet, daß die Fließzahl der verwendeten Bestandteile zwischen einschließlich 0,2 und 2 liegt, wodurch der Film zurückziehbar ist.

15. Verpackungsanordnung von schnell zu öffnenden Gegenständen, dadurch gekennzeichnet, daß sie einen ein Versprödungsmittel enthaltenden einlagigen Film aus Kunststoffmaterial, der durch Monoextrusion erhalten wird und die Gegenstände wenigstens teilweise unhüllt, und wenigstens ein Mittel, das einen Reißansatz bildet umfaßt, wodurch die Verpackung manuell wenigstens in eine vorbestimmte Richtung ausgehend von den den Reißansatz bildenden Mitteln aufgerissen werden kann.

16. Verpackungsanordnung gemäß Anspruch 15, dadurch gekennzeichnet, daß die den Reißansatz bildenden Mittel eine Vorstanzung des Films umfassen.

17. Verpackungsanordnung nach Anspruch 16, dadurch gekennzeichnet, daß die den Reißansatz bildenden Mittel eine einstückige Lasche des Films umfassen.

18. Verpackungsanordnung gemäß einem der Ansprüche 15 bis 17, dadurch gekennzeichnet, daß das Versprödungsmittel von der Art ist, wie es in einem der Ansprüche 2 bis 5 definiert ist.

19. Verpackungsanordnung nach einem der Ansprüche 15 bis 18, dadurch gekennzeichnet, daß der Reißansatz in Extrusionsrichtung angeordnet ist.

20. Verpackungsanordnung nach einem der Ansprüche 15 bis 19, dadurch gekennzeichnet, daß der Reißansatz in einer orthogonalen Richtung zur Extrusionsrichtung angeordnet ist.

Fig_1

Fig_2

Fig_3

34

36

28

30

32

40

44

42

Fig_4

46

52   48   50   54

Fig_5

A

a

b

a'

l

L

Fig_9

Fig_6

Fig_7

Fig_8